# EUROPEAN PATENT APPLICATION

(11) **EP 4 173 529 A1**
(43) Date of publication of application: **03.05.2023**
(21) Application number: 22807748.3
(22) Date of filing: 09.05.2022
(51) Int. Cl.: A47J 31/36, B65D 85/804

(54) **BEVERAGE PREPARATION APPARATUS COMPRISING SHAPE TRANSFORMATION MEMBER, AND METHOD FOR PREPARING BEVERAGE BY MEANS OF SAME**

(30) Priority: 10.05.2021 KR 20210059917
(71) Applicant: Dongsuh Foods Corporation, Incheon 21314 (KR)
(72) Inventor: KIM, Minsoo, Bucheon-si Gyeonggi-do 14506 (KR); PARK, Chang Jin, Goyang-si Gyeonggi-do 10394 (KR); KIM, Young Jin, Anyang-si, Gyeonggi-do 13903 (KR)
(74) Representative: Prüfer & Partner mbB Patentanwälte · Rechtsanwälte
(86) International application number: PCT/KR2022/006575
(87) International publication number: WO 2022/240100

(57) **Abstract**

The present invention relates to a capsule for preparing a beverage whose shape can be deformed into a predetermined shape by external pressure, and an apparatus for preparing a beverage comprising a shape-deforming member for deforming a shape of the capsule.

The present invention solves the problems that an interior volume of the capsule is increased due to generation of gas in the conventional capsule and that distribution of a substance for preparing the beverage becomes non-uniform, and has features capable of removing an empty space inside the capsule by deforming a shape of the capsule before the beverage is prepared and distributing a substance for preparing the beverage in a uniform and constant height. Accordingly, the present invention not only provide a beverage of uniform quality through more constant extraction time and extraction concentration, but also can extract a beverage with more solid contents even when the same amount of beverage is extracted. Further, since the present invention can also provide a shorter extraction time even when extracted at the same concentration, a beverage having excellent sensuality can be provided. In addition, the present invention has an effect capable of preparing a beverage having excellent sensuality with uniform extraction property, even if a large capacity capsule is used.

## Description

### TECHNICAL FIELD

The present invention relates to an apparatus for preparing a beverage comprising a shape-deforming member and a method for preparing a beverage using the same, and more particularly, is directed to a system comprising a capsule for preparing a beverage whose shape can be deformed into a predetermined shape by external pressure, and an apparatus comprising a shape-deforming member for deforming a shape of the capsule.

### BACKGROUND ART

Capsule coffee is designed to be extracted by putting a dedicated capsule containing ground coffee in an amount of one cup into an extracting machine dedicated to the capsule coffee, wherein the capsule is sealed such that ground coffee beans therein are not oxidized, thereby solving a problem of oxidation that may occur during storage after being ground.

The capsule coffee has been steadily gaining popularity from consumers since it first launched in the European market in the 1980s. Due to its convenience, capsules sealing products, in addition to the coffee, such as ice tea, hot chocolate, lemon tea, powdered milk, carbonated beverages, fruit beverages, etc. are also being developed in various ways.

These capsules are stored and distributed in a sealed state such that a contact between substances inside the capsule and oxygen is shut off to preserve a flavor of the material and extend its shelf life. For example, as disclosed in International Patent Publication No. WO1986/002537, the coffee capsules may be hermetically sealed under a vacuum.

However, some of the beverages, for example roasted coffee, may dissipate gas when stored in the capsules, which may cause the sealing of the capsules to be damaged during storage. Therefore, in order to avoid this, after roasting the coffee, it is subjected to a degassing step in which gas is released for a certain period of time before being packaged in the capsule.

International Patent Publication No. WO2014/005873 discloses a process of performing the degassing simultaneously while packaging coffee in a capsule, and a coffee capsule manufactured therefrom. According to the above patent, the process of degassing as a separate step outside the capsule can be omitted, thereby simplifying the manufacturing process.

However, even if the sealing is performed after sufficiently releasing the gas from a substance for preparing a beverage such as coffee, a small amount of gas is released during the storage and distribution process of the capsule. Since the material of the capsule body and/or the cover is configured to have some flexibility, the capsule is not damaged and its internal volume is increased by the release of the gas.

Due to the flexibility of the capsule material, it is possible to prevent the capsule sealing from being damaged during the storage and distribution of the capsule, but the increase in a space inside the capsule results in a change in the density and uniform distribution of the material inside the capsule which were intended in its manufacture. The non-uniform distribution of the material inside the capsule not only changes a physical property and a yield of the beverage intended in the manufacture of the capsule, but also causes the quality of the beverage produced to be uneven or requires more time to extract the target concentration of the beverage.

Under such a circumstance, the present inventors have found that by deforming a shape of the capsule when extracting a beverage using the capsule, an empty space inside the capsule can be removed and substances inside the capsule can be changed to a uniform distribution as in the manufacturing thereof, and have come to complete the present invention.

### DISCLOSURE

### Technical Problem

It is an object of the present invention to provide a capsule whose shape is deformed by pressurization.

It is another object of the present invention to provide a method for preparing a beverage using the capsule.

It is still another object of the present invention to provide an apparatus for preparing a beverage comprising a member for deforming a shape of the capsule.

It is yet another object of the present invention to provide a method for preparing a beverage using the apparatus.

It is still another object of the present invention to provide a system for preparing a beverage using the capsule and the apparatus.

### Technical Solution

In order to achieve the objects as described above, the present invention provides a capsule comprising: a capsule body 10 comprising a bottom part 11, a side wall part 12 and a flange 13 and accommodating a substance for preparing a beverage therein; and a cover 20 that is attached to the flange 13 to seal an opening of the capsule body 10, wherein the capsule body 10 is configured to deform its shape by pressurization before extracting the beverage.

In the present invention, it is preferable that the deformation of the shape is made in a direction in which a volume inside the capsule is reduced.

In the present invention, it is preferable that the volume inside the capsule is reduced between 1 to 20% by the shape deformation of the capsule body 10.

In the present invention, it is preferable that the deformation of the shape is made such that only a shape of the bottom part 11 is deformed while a shape of the side wall part 12 is maintained.

In the present invention, it is preferable that the deformation of the shape is made such that a height (a) of the bottom part 11 is lowered.

In the present invention, it is preferable that the deformation of the shape is made under a load of 0.3 to 3.0 kgf.

In the present invention, it is preferable that an angle (β) formed by the side wall part 12 and a surface connecting the lower end of the side wall part 12 is 75 to 90°, and an angle (α) formed by a surface of the bottom part 11 in contact with the side wall part 12 and a surface connecting the upper end of the side wall part 12 is 45° or less.

In the present invention, it is preferable that the bottom part 11 comprises a guide 14 which has a relatively thin thickness, a relatively weak strength, or a shape folded inward or outward of the capsule so as to be deformed to a predetermined shape.

The present invention also provides a method for preparing a beverage using a capsule, wherein the capsule comprises a capsule body 10 comprising a bottom part 11, a side wall part 12 and a flange 13 and accommodating a substance for preparing a beverage therein, and a cover 20 attached to the flange 13 to seal an opening of the capsule body 10, the method comprising the steps of: perforating the bottom part 11 of the capsule to form a hole; pressurizing the capsule body 10 to deform its shape; injecting a liquid into the hole to interact with the substance to form the beverage, wherein the liquid is injected until the cover 20 is ruptured by a pressure of the liquid inside the capsule; and extracting the beverage through the ruptured cover 20 of the capsule.

The present invention also provides an apparatus for preparing a beverage from a capsule, the apparatus comprising: a chamber 110 configured to have a receiving space capable of inserting the capsule therein and to be movable between a capsule insertion position and a capsule extraction position; and an extraction member 120 which closes an opening of the chamber 110 when the chamber 110 is placed at the capsule extraction position and causes the cover 20 of the capsule to rupture due to a pressure of a liquid injected into the capsule thereby extracting the beverage, wherein the chamber 110 comprises a liquid injecting member 113 for injecting the liquid into the chamber 110 and a perforating member 114 for forming a hole in the capsule, wherein the chamber 110 further comprises a shape-deforming member 115 for pressurizing the capsule to deform its shape, and wherein the apparatus is configured to deform the shape of the capsule by the shape-deforming member 115 before extracting the beverage.

In the present invention, at least a portion of the perforating member 114 may be located on at least one surface of the shape-deforming member 115.

In the present invention, the perforating member 114 may be formed on an inner surface of the chamber 110 and pass through the shape-deforming member 115.

In the present invention, the shape-deforming member 115 may be configured as a detachable type.

In the present invention, before the shape-deforming member 115 pressurizes the capsule, the perforating member 114 may be configured to form a hole in the capsule and then move to the outside the capsule.

In the present invention, it is preferable that the shape-deforming member 115 comprises an elastic material.

In the present invention, it is preferable that the shape-deforming member 115 comprises a protrusion or a recess.

In the present invention, it is preferable that the shape-deforming member 115 is configured to apply a load of 0.3 to 3.0 kgf to the capsule.

The present invention also provides a method for preparing a beverage using the apparatus, the method comprising the steps of: inserting a capsule into a chamber 110 of the apparatus; moving the chamber 110 to a capsule extraction position so that the perforating member 114 forms a hole in the capsule and the shape-deforming member 115 pressurizes the capsule to deform a shape of the capsule; injecting a liquid into the chamber 110 through a liquid injecting member 113 so that the liquid interacts with a substance for preparing the beverage in the capsule to form the beverage; and extracting the beverage by rupturing a cover of the capsule by an extraction member 120.

In the present invention, it is preferable that the rupture of the capsule cover is performed when a pressure of the liquid inside the capsule reaches a predetermined pressure range.

The invention also provides a system for preparing a beverage from a capsule, the system comprising: a capsule comprising a capsule body 10 which consists of a bottom part 11, a side wall part 12 and a flange 13 and accommodates a substance for preparing the beverage therein, and a cover 20 attached to the flange 13 to seal an opening of the capsule body 10, wherein the capsule body 10 is configured to deform its shape by pressurization before extracting the beverage; and an apparatus for preparing a beverage comprising a chamber 110 configured to have a receiving space capable of inserting the capsule therein and to be movable between a capsule insertion position and a capsule extraction position, and an extraction member 120 which closes the opening of the chamber 110 when the chamber 110 is placed at the capsule extraction position and causes the cover 20 of the capsule to rupture due to a pressure of a liquid injected into the capsule thereby extracting the beverage, wherein the chamber 110 comprises a liquid injecting member 113 for injecting the liquid into the chamber 110 and a perforating member 114 for forming a hole in the capsule, wherein the chamber 110 further comprises a shape-deforming member 115 for pressurizing the capsule to deform its shape, and wherein the system is configured to deform the shape of the capsule by the shape-deforming member 115 before extracting the beverage.

### Advantageous Effects

The present invention solves the problems that an internal volume of the capsule is increased due to generation of the gas in the conventional capsule for preparing a beverage, and that distribution of a substance for preparing the beverage becomes non-uniform, and is characterized in removing an empty space inside the capsule by deforming a shape of the capsule before preparing the beverage and distributing a substance for preparing the beverage in a uniform and constant height. Accordingly, the the present invention not only provide a beverage of uniform quality through more constant extraction time and extraction concentration, but also can extract a beverage with more solid contents even when the same amount of beverage is extracted. Further, since the present invention can also provide a shorter extraction time even when extracted at the same concentration, a beverage having excellent sensuality can be provided. In addition, the present invention has an effect capable of preparing a beverage having excellent sensuality with uniform extraction property, even if a large capacity capsule is used.

### BRIEF DESCRIPTION OF DRAWINGS

FIG. 1 is a perspective view showing a capsule according to an embodiment of the present invention.
FIG. 2 is a cross-sectional view showing a capsule according to an embodiment of the present invention.
FIG. 3 shows that a capsule is located inside a chamber before the chamber is closed in an apparatus for preparing a beverage according to the prior art.
FIG. 4 shows that a chamber is completely closed to complete sealing in an apparatus for preparing a beverage according to the prior art.
FIG. 5 shows a change in an internal appearance of a capsule during storage and transportation of the capsule.
FIG. 6 shows an internal appearance of a capsule after a shape of the capsule is deformed according to the present invention.
FIG. 7 is a perspective view showing a capsule comprising a guide for deforming a shape according to an exemplary embodiment of the present invention.
FIG. 8 is a perspective view showing the capsule of FIG. 7 after a shape of the capsule is deformed.
FIG. 9 is a perspective view showing a capsule comprising a guide for deforming a shape according to another exemplary embodiment of the present invention.
FIG. 10 is a perspective view showing the capsule of FIG. 9 after a shape of the capsule is deformed.
FIG. 11 shows an appearance in which a capsule is introduced but not yet mounted in a beverage extraction unit of an apparatus for preparing a beverage according to an exemplary embodiment of the present invention.
Fig. 12 shows an appearance after a capsule is completely mounted to a beverage extraction unit of an apparatus for preparing a beverage according to an exemplary embodiment of the present invention.
FIG. 13 shows an appearance in which a capsule is located within a chamber before the chamber is closed according to an embodiment of the present invention.
FIG. 14 shows an appearance after a chamber is completely closed to complete sealing according to an embodiment of the present invention.
FIG. 15 shows an image of a capsule before its shape is deformed according to an embodiment of the present invention.
FIG. 16 shows an image of a capsule whose shape is deformed according to an embodiment of the present invention.
FIG. 17 shows an image after forcibly deforming the shape of a commercially available capsule.
FIG. 18 is a comparison between an image in which the shape of a capsule according to an embodiment of the present invention is deformed (left) and an image after forcibly deforming the shape of a commercially available capsule (right).

### DETAILED DESCRIPTION OF EMBODIMENTS

Hereinafter, concrete embodiments of the present invention will be described in more detail. Unless defined otherwise, all technical and scientific terms used in this specification have the same meanings as commonly understood by those skilled in the art to which the present invention belongs. In general, the nomenclature used in the specification is well known and commonly used in the relevant art.

The present invention relates to a capsule for preparing a beverage and an apparatus for preparing the beverage using the capsule.

In the present invention, the term "capsule" refers to a container in which a substance for preparing a beverage is stored in an interior of the container and is put into an apparatus for preparing a beverage to produce the beverage, and may be used with the terms such as "pod", "cartridge" and "packet" interchangeably.

In order to prepare a beverage, a capsule of the present invention is introduced into an apparatus for preparing a beverage, and if the apparatus is operated, a liquid is introduced into the capsule and interacts with a substance stored in the capsule to prepare the beverage. The prepared beverage is extracted outside the capsule so that the consumer can drink it.

The substance accommodated inside the capsule is not particularly limited as long as it interacts with the liquid to prepare the beverage. The substance may be a powder or a liquid, and the powder is more preferred. The substance may be, for example, coffee, powdered milk, cocoa, tea, soup, porridge, carbonated beverage, fruit beverage, or any combination thereof.

Hereinafter, embodiments of the present invention will be described in more detail with reference to the accompanying drawings.

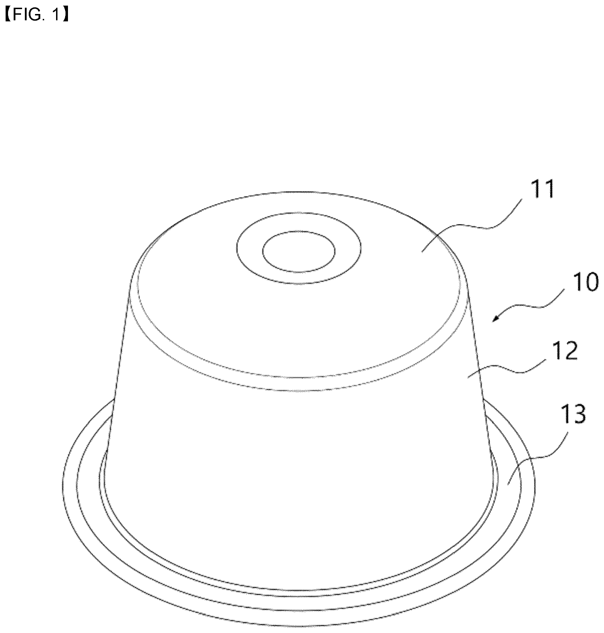

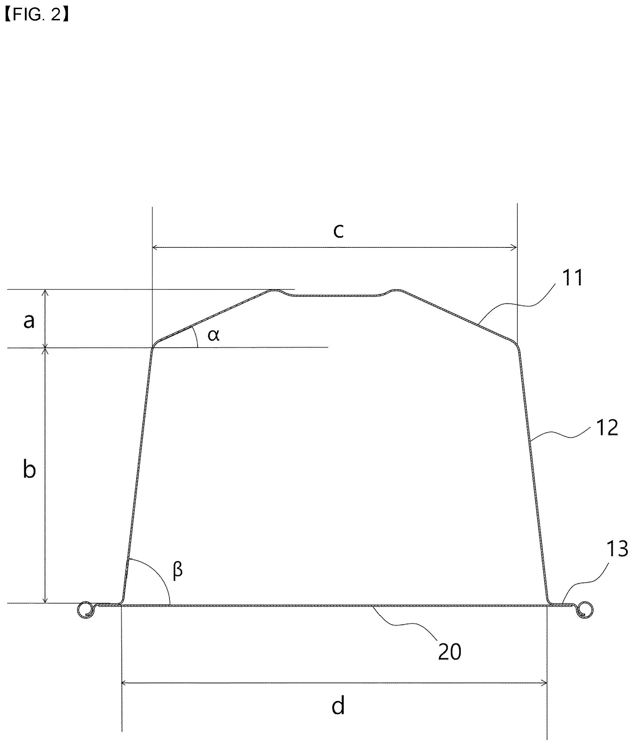

FIGS. 1 and 2 are a perspective view and a cross-sectional view of a capsule according to an embodiment of the present invention.

The capsule of the present invention comprises a capsule body 10 which has a bell-shaped container for accommodating a substance for preparing a beverage therein, and a cover 20 for sealing an opening of the capsule body 10.

The capsule body 10 forms a container shape into which the substance can be accommodated by a bottom part 11 and a side wall part 12, and comprises a flange 13 that extends from a lower end of the side wall part 12 in an outer direction of the capsule.

A shape of the bottom part 11 is not particularly limited, but may be a truncated conical shape or a hemispherical shape, wherein the truncated conical shape or the hemispherical shape may be additionally provided with some protrusions or intaglios. For example, the bottom part 11 may have a flat portion such that it can be easily erected when the capsule is placed with the bottom part facing downwards.

A height (a) of the bottom part 11 may be freely set according to a capacity of the capsule, and may be set, for example, between 2 and 8 mm, preferably between 4 and 6 mm, and more preferably between 4.5 and 5.0 mm.

When the beverage is prepared using the capsule of the present invention, a liquid is injected by perforating an aperture or a hole in the bottom part 11. To this end, the bottom part 11 may comprise a perforation guide (not shown) formed of a relatively thin thickness or made of another material such that the hole can be easily formed by a perforating member of the apparatus for preparing a beverage.

Further, a screen (not shown) may be provided to an inner side of the bottom part 11 to prevent a solid substance in the capsule from escaping out when the perforating member is released. The screen may be made of a material that is permeable to water but impermeable to particles, and may comprise, for example, a paper, a woven or a nonwoven fiber, and the like.

The side wall part 12 forms a wall surface of the capsule, wherein an overall shape of the capsule body 10 is determined by the side wall part 12. In general, the side wall part 12 is in a shape of a cylindrical or truncated cone having a center of the capsule body 10 as an axis, but may have an angled shape such as a square or a pentagon or be provided in an asymmetrical shape within the scope of the technical idea of the present invention.

A height (b) of the side wall part 12 may be set differently according to a capacity of the capsule, and may be set, for example, between 10 and 40 mm, preferably between 20 and 26 mm, and more preferably between 22 to 25 mm.

The side wall part 12 is connected to the bottom part 11 at an upper end thereof and to the flange 13 at a lower end thereof. A diameter (c) of the upper end of the side wall part 12 (that is, a size of the bottom part) may be set differently according to a capacity of the capsule, and may be set, for example, between 20 and 50 mm, and preferably between 30 and 35 mm. In addition, a diameter (d) of the lower end of the side wall part 12 may be set, for example, between 20 and 50 mm, and preferably may be set between 35 and 40 mm.

The lower end of the side wall part 12 is provided with the flange 13 extending in an outer direction thereof. The flange 13 is fitted between a hermetic closing member and an extraction member of the chamber when the capsule is mounted to the apparatus for preparing the beverage so that it can be firmly fixed. An end of the flange 13 may be finished in a rolled-up shape so as not to fall out while being fixed to the chamber and the user may be prevented from being injured by a distal end of the flange.

In an exemplary embodiment, the flange 13 may additionally comprise a sealing member (not shown). The sealing member may serve to seal the chamber in order to prevent the liquid from leaking out of the chamber and dropping the pressure when the liquid is injected into the chamber of the apparatus for preparing the beverage at a high pressure.

The sealing member is preferably made of an elastic material. For example, the sealing member may comprise a rubber, an elastomer, a silicone, a plastic, a latex, and the like, but is not particularly limited thereto. For example, the sealing member may be applied to an upper portion of the flange 13 in a fluid or viscous form and then cured or polymerized.

The flange 13 may have a flat shape, but in another exemplary embodiment, the flange 13 may have a curved shape. In case the flange 13 has the curved shape, a hermetic closing member of the chamber in the apparatus for preparing the beverage also has the same curved shape so that the capsule can be fixed and sealed more firmly.

A length of the flange 13, that is, a difference between the outer diameter and the inner diameter of the flange 13 may be 2 to 8 mm, preferably 3 to 5 mm.

The capsule body 10 may be made of an oxygen-impermeable flexible material selected from a metal, a plastic, a paper, and a composite material of two or more thereof, and the metal may most preferably comprise an aluminum. In addition, the above material may be composed of multiple layers to afford various properties.

A thickness of the capsule body 10 may be set differently depending on the material within the range of 10 to 500 µm, preferably 50 to 150 µm, and more preferably 80 to 120 µm. In addition, the capsule body 10 may have a different thickness depending on each portion thereof. For example, by setting a portion of the bottom part 11 to a relatively thin thickness, the capsule body 10 may be more easily perforated by the perforating member.

The cover 20 is attached to a lower surface of the flange 13 to seal an opening of the capsule body 10. The cover 20 seals the capsule such that a substance for preparing the beverage is accommodated into the capsule body 10. When the liquid is injected into the capsule, the cover 20 is torn only at a predetermined pressure or more so that it provides a path for the prepared beverage to escape outside the capsule.

The cover 20 may be made of an oxygen-impermeable flexible material selected from a metal, a plastic, a paper, and a composite material of at least two of them, and may comprise, for example, a material such as an aluminum, ethylene vinyl alcohol (EVOH), polyvinyl chloride (PVDC), polyethylene terephthalate (PET), polypropylene

(PP), polyethylene (PE), a paper, a woven fabric, and a non-woven fabric. In addition, the above material may be composed of multiple layers to provide various properties.

A thickness of the cover 20 may be set differently depending on the material within the range of 1 to 100 µm, and is preferably set to the thickness that can be torn only at a predetermined pressure when the liquid is injected into the capsule. The pressure is preferably in the range of 1 to 20 bar, more preferably 5 to 15 bar.

Alternatively, the cover 20 may comprise a portion having a relatively thin thickness so that rupture occurs at a desired portion to extract the beverage in a desired type.

A filter may be provided between the cover 20 and the capsule body 10 to prevent a solid material of the capsule from escaping through the torn portion of the cover 20. The filter may be a paper, a woven fiber or a non-woven fiber.

A capacity of the capsule of the present invention may be selected within 3 to 20 g and can be applied to any capsule to exert an excellent effect. Preferably, it may be applied to a large capacity capsule of 8 to 12 g to provide an extraction quality that could not be provided in a conventional large capacity capsule.

The capsule of the present invention may be applied to an apparatus for preparing a beverage so as to prepare a beverage.

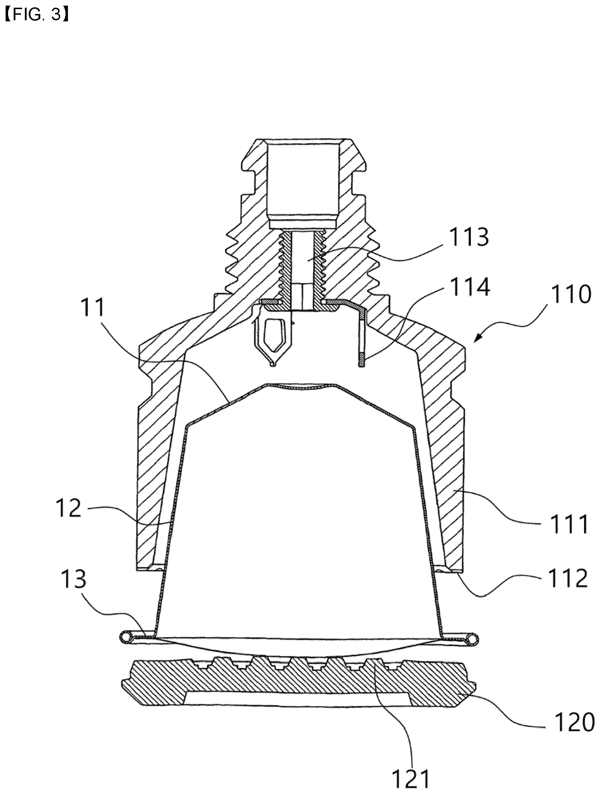

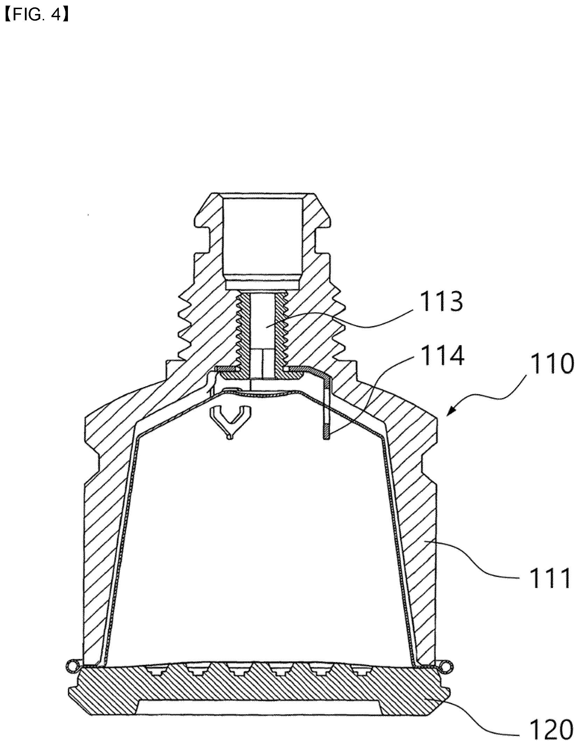

FIGS. 3 and 4 show an appearance of a chamber for extracting a beverage in an apparatus for preparing beverage according to the prior art. FIG. 3 shows that the capsule is located inside the chamber before the chamber is still closed and sealed, and FIG. 4 shows that the chamber is completely closed and sealed.

In the apparatus for preparing the beverage of FIG. 3, the capsule is located between the chamber 110 having an inner space of a shape and a size similar to those of the capsule body 10 and an extraction member 120 adjacent to a capsule cover 20. The chamber 110 is configured to move between a capsule insertion position for inserting the capsule into the inner space of the chamber and a capsule extraction position for allowing to completely seal the inner space of the chamber by pressurizing the extraction member 120 while the capsule is accommodated therein.

The chamber 110 comprises a chamber body 111 having an inner space formed to surround a bottom part 11 and a side wall part 12 of the capsule while accommodating the capsule into the chamber 110, a hermetic closing member 112, as a distal end of the chamber body 111, for completely sealing an interior of the chamber by contacting the extraction member 120, a liquid injecting member 113 for injecting a liquid into the chamber, and a perforating member 114 for forming an aperture or a hole in the capsule.

As shown in FIG. 4, when the chamber 110 is closed by the user's operation to be placed to the capsule extraction position, the chamber body 111 moves downward so that the hermetic closing member 112 and the extraction member 120 can come into contact with the flange 13 of the capsule fitted therebetween to fix the capsule while sealing the interior of the chamber.

The hermetic closing member 112 as a distal end of the chamber body 111 may be a simple end part to which the same material as that of the chamber body is extended. However, according to an embodiment, it may further comprise another sealing member (not shown) made of an elastic material for more robust sealing.

As the chamber 110 moves to the capsule extraction position, the perforating member 114 moves downward to penetrate the bottom part 11 of the capsule to form an aperture or a hole.

Thereafter, if the user presses an operation button (or automatically), a liquid is introduced into the chamber 110 through the liquid injecting member 113. Since the interior of the chamber 110 is hermetically closed, the liquid filling the interior of the chamber 110 is injected into the capsule through the aperture or the hole of the capsule formed by the perforating member 114.

According to such an operation, a pressure is generated by the liquid filled in the interior of the capsule, and when the interior reaches a predetermined pressure, the cover 20 is ruptured by a protrusion 121 formed at the portion of the extraction member 120 in contact with the capsule cover 20 so that the beverage formed by interaction of the liquid with the substance for preparing the beverage inside the capsule can be extracted to the outside of the capsule. The pressure is preferably in the range of 1 to 20 bar, more preferably 5 to 15 bar.

The rupture (or tearing) of the cover 20 may be made as soon as the pressure inside the capsule exceeds the threshold value, and includes an action such as fracture, cutting or perforation as well as typical tearing due to elongation of the material of the cover 20 beyond its tensile strength.

The protrusion 121 formed on the extraction member 120 may have an arbitrary protrusion shape capable of (partially) tearing the cover 20. For example, the protrusion 121 may have a pyramid shape, a needle shape, a blade shape, a bump shape, a cylindrical shape, and an elongated rib shape.

The extraction member 120 may comprise a plurality of extraction holes (not shown) such that the beverage exited from the cover 20 of the capsule can be delivered to the user. The extraction hole is preferably formed between the protrusions 121, and serves to move the beverage that has passed through the extraction member 120 to deliver it to the consumer through one tube.

The apparatus for preparing the beverage of such a prior art is configured in a manner of extracting the beverage without deforming an external shape of the capsule, except for forming a perforated hole in the capsule. However, such a manner has problems such as a decrease in a beverage extraction yield, non-uniform beverage quality, or a decrease in flavor of a beverage due to gas generation and rearrangement of beverage powder that may occur during storage and transportation of the capsule.

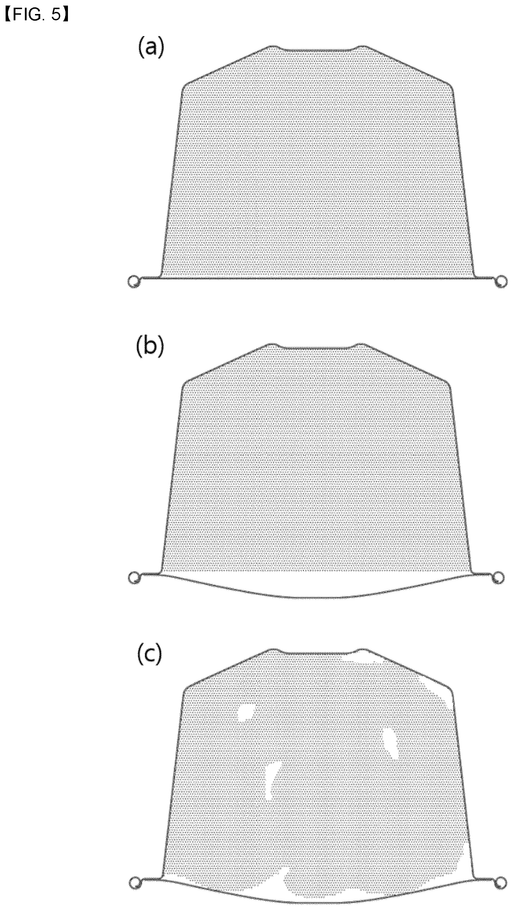

Specifically, FIG. 5 shows a change in an interior of the capsule during storage and transportation of the capsule. As shown in FIG. 5(a), the capsule having the appearance first manufactured is filled with a substance for preparing a beverage inside the capsule. However, in case of comprising the substance for preparing the beverage, in particular, a roasted coffee bean, since gas such as carbon dioxide is discharged from the substance, the capsule cover 20 swells as shown in FIG. 5(b) to form an empty space. In this way, if the capsule having the cover 20 swollen is transported or moved by the consumer, the substance inside the capsule moves to the empty space, whereby the capsule has a density and a non-uniform distribution which is different from those intended at the time of initial manufacture, as shown in FIG. 5(c). Such variations in the density and non-uniformity of the substance inside the capsule adversely affects a quality, a flow rate, a concentration, and an extraction time of the prepared beverage. Such a phenomenon may occur in the same manner not only by gas generation inside the capsule, but also by an empty space intentionally or unintentionally created during the filling process of the substance into the capsule.

In order to solve such problems, in the present invention, the capsule body 10 is configured to deform its shape by pressurization before extracting a beverage, thereby allowing the beverage to be extracted while removing the empty space inside the capsule and uniformly distributing the substance inside the capsule.

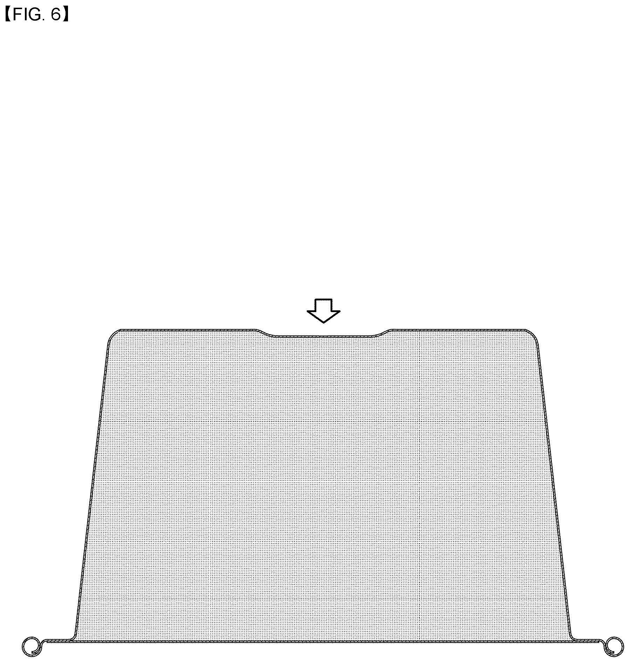

For example, in case the substance is unevenly distributed as the inner space of the capsule increases as shown in FIG. 5(c), the bottom part 11 of the capsule is pressurized to deform the bottom part 11 toward the interior of the capsule as shown in FIG. 6, so that the inner space of the capsule can be reduced to remove the empty space and the substance inside the capsule can be pressurized to rearrange the substance that has been unevenly distributed to a high density and an uniform distribution again. In addition, a substance for preparing a beverage is arranged to a uniform height by pressurization. It was confirmed from the embodiment of the present invention that the quality of the beverage was uniform, a relatively large amount of solids could be extracted, and the time required to extract the target beverage concentration could be shortened when the beverage was extracted after the capsule was deformed to rearrange the inner substance. Specifically, as the substance inside the capsule is uniformly compacted, a channeling phenomenon that may occur during flow of water passing through the capsule can be minimized, and an appropriate extraction pressure is formed inside the capsule to improve extraction force. In addition, since the substance for preparing the beverage is rearranged densely, it is possible to extract even portions that have not been extracted by prior technologies so that the intensity of taste and aroma is expressed more intensely, whereby it is possible to prepare a beverage that is more suitable for realizing the original beverage taste intended in the development stage and has improved sensuality.

In this aspect, the shape of the capsule body 10 is preferably deformed in a direction in which a liquid is injected. By the shape deformation in a direction in which a liquid is injected, it is easy to configure the beverage extraction apparatus to naturally pressurize the capsule in the process of covering the capsule for extracting a beverage. That is, the shape of the capsule can be deformed by using the pressing force of the chamber, which is essential in the process of extracting the beverage.

In the present invention, the shape of the capsule body 10 is preferably deformed in a direction in which the volume inside the capsule is reduced. By the shape deformation, the interior volume of the capsule may be reduced by 1 to 20%, preferably 3 to 18.5%, most preferably 8 to 14%. If the shape of the capsule body 10 is deformed within the above range, the substance for preparing the beverage can be distributed uniformly while completely removing the empty space formed inside the capsule.

In order to achieve this object of the present invention, the height (a) of the bottom part 11 may be set to 10 to 30% of the height (b) of the side wall part 12, preferably 15 to 25%, and more preferably 18 to 22%.

In particular, in case of the existing capsule for preparing the beverage, as an amount that can be extracted at one time is small, there is an inconvenience that the consumer feels insufficient or has to drink the beverage by extracting a number of capsules. In order to solve this inconvenience, a large capacity capsule capable of accommodating a beverage preparing substance of about 10 g has been proposed. However, the larger a size of the capsule, the greater an amount of gas discharged, which results in forming more empty space, and thus, the yield reduction and deterioration of the sensuality occurred more significantly due to the uneven distribution of the substance inside the capsule.

Further, in case of the existing large capacity capsule, as the diameter of the capsule is increased, there is a problem that it is difficult to evenly pass through the entire diameter of the capsule due to the occurrence of a channeling phenomenon when liquid is injected into the capsule and passes through the substance inside the capsule. Therefore, conventional large capacity capsules have chosen a strategy of increasing the height of the capsule while keeping the diameter of the capsule small. However, since the internal pressure can increase excessively if the height of the capsule is high, in most cases, the pressure was lowered by increasing the particle size of the substance inside the capsule. However, when the particle size of the substance is large, there are still problems such as that the beverage is not infused deeply or it takes a long time to extract. Therefore, large capacity capsules were difficult to utilize due to limitations in manufacturing and sales.

According to the present invention, the beverage is extracted while the substance inside the capsule is uniformly rearranged without occurring the empty space regardless of the size of the capsule, so that not only the yield is increased, but also the taste and aroma intended when it was initially manufactured can be maintained as it is. Therefore, even though the diameter of the large capacity capsule is large, the liquid can evenly pass through the substance inside the capsule and the particle size of the substance can be made small due to the low height of the capsule, so that the beverage is infused deeply and extraction does not take a long time, thereby providing a large capacity capsule having excellent and uniform yield and sensuality.

In this aspect, the capsule of the present invention is preferably a flat capsule in which the ratio of the diameter (c) of the upper end of the side wall part 12 to the height (b) of the side wall part 12 is 1:1 to 1:2, more preferably 1:1.2 to 1:1.6, and most preferably 1:1.3 to 1:1.5.

In the present invention, the shape deformation of the capsule may be made when a specific range of load is applied to the capsule. Specifically, the capsule body 10 is pressurized from the outside to apply the load, but the shape of the capsule is not deformed before reaching a predetermined load. In this case, the load is preferably greater than the load that can be applied during the storage and distribution process of the capsule. If the load applied to the capsule reaches a predetermined range, the capsule is deformed into a predetermined shape. The predetermined shape may mean that, for example, the bottom part 11 of the capsule is deformed, but the shape of the side wall part 12 and the flange 13 is not deformed.

In the present invention, the "deformation of shape" means that a portion that can be deformed by external pressure is determined in advance when the capsule is manufactured to deform the corresponding portion, and that the deformation occurs in the same way even if repeatedly pressurized. Herein, the same way means that the capsule is deformed at a predetermined portion, and does not mean that the shape in which the capsule is deformed must be completely identical every time. In addition, it does not mean only a completely deformed state until the area to be deformed can be deformed as much as possible, but also includes a process of being deformed toward a shape that can be deformed as much as possible. In other words, it means a state in which the empty space inside the capsule is completely removed and completely filled with a substance for preparing a beverage so that it cannot be deformed any more.

Specifically, the capsule may be deformed into a predetermined shape in a range in which the load applied to the capsule is 0.3 to 3.0 kgf, preferably 0.3 to 1.5 kgf, and more preferably 0.3 to 0.6 kgf. If the shape of the capsule is deformed at a load of less than 0.3kgf, it is not desirable because the shape is deformed before the hole is formed by the perforation means, whereby the perforation is not smoothly performed. If an excessive load is applied, the capsule may deviate from the intended shape to be broken. It is preferable that the structure of the capsule is designed such that the shape of the capsule can be deformed as intended in the above range, simultaneously while unintended deformation does not occur.

In the present invention, since the shape of the capsule is deformed by pressurization in a direction in which a liquid is injected, the shape of the injection portion is deformed. That is, the liquid injection portion of the capsule is deformed in a direction in which the volume inside the capsule is reduced.

In a preferred embodiment of the present invention, the predetermined shape may mean that the bottom part 11 is folded toward the interior of the capsule so that a height (a) of the bottom part 11 is lowered. In this case, it is preferable that a shape and a height (b) of the side wall part 12 are maintained as it is. In the present invention, due to the shape deformation of the capsule, the height (a) of the bottom part 11 may be zero or lower than zero.

In the most preferred embodiment of the present invention, the shape of the side wall part 12 is maintained while the bottom part 11 is flattened so that the capsule body 10 can be deformed to have a uniform height. In this regard, the flattening of the bottom part 11 does not mean that it is completely flat without any wrinkles, but that it has an overall flat shape in consideration of overlapped or bent portions of the material of the capsule.

The capsule of the present invention may be deformed in the shape by various mechanisms.

In a preferred embodiment of the present invention, it is possible to induce deformation to occur only in a predetermined portion by controlling the shape of the capsule body 10.

Specifically, as shown in FIG. 2, by controlling an angle (α) formed by a surface of the bottom part 11 in contact with the side wall part 12 and a surface connecting the upper end of the side wall part 12 to be lower than an angle (β) formed by the side wall part 12 and a surface connecting the lower end of the side wall part 12, only the shape of the bottom part 11 may be deformed by external pressure with the shape of the side wall part 12 being maintained as it is. More specifically, the angle (β) of the side wall part 12 is preferably 75 to 90°, more preferably 80 to 87°, and most preferably 82 to 85°. If the angle (β) of the side wall part 12 is controlled in this way, the side wall part 12 can easily withstand the pressure pressing the bottom part 11 while maintaining its shape.

In addition, the angle (α) of the bottom part 11 is preferably 45° or less, more preferably 15 to 35°, and most preferably 22 to 27°. Within the above range, it can be easily deformed under external pressure to pressurize the substance inside the capsule. When the angle (α) of the bottom part 11 is larger than the above range, a larger force is required for deforming the shape. However, by such a larger force, the deformation of the shape cannot be uniformly controlled and may be excessively deformed or an irregular shape. In addition to being deformed, there may be a problem in that the area to be folded due to the shape deformation is increased, so that the shape deformation is difficult to be uniformly formed into a desired shape.

In another preferred embodiment of the present invention, a deformation in the shape may be adjusted by controlling a thickness of the bottom part 11 and the side wall part 12. When the external pressure as described above is applied, it is preferrable that the bottom part 11 has a thickness in the shape that can be deformed by the pressure, and that the side wall part 12 withstands the pressure so that the shape is not deformed. Alternatively, a thickness of the connection portion connecting the bottom part 11 and the side wall part 12 may be relatively thin so that the bottom part 11 may be easily deformed. This thickness can be suitably adjusted to meet the range of pressures designed to be applied for deformation of the capsule.

Further, in another preferred embodiment of the present invention, the bottom part 11 may comprise a guide 14 for deformation of the shape as shown in FIG. 6. The guide 14 refers to a portion that is relatively easily folded such that the bottom part 11 can be deformed into a desired shape, and may be configured, for example, to have relatively thin thickness or a relatively weak strength such as being easily folded, or to be folded inward or outward in advance.

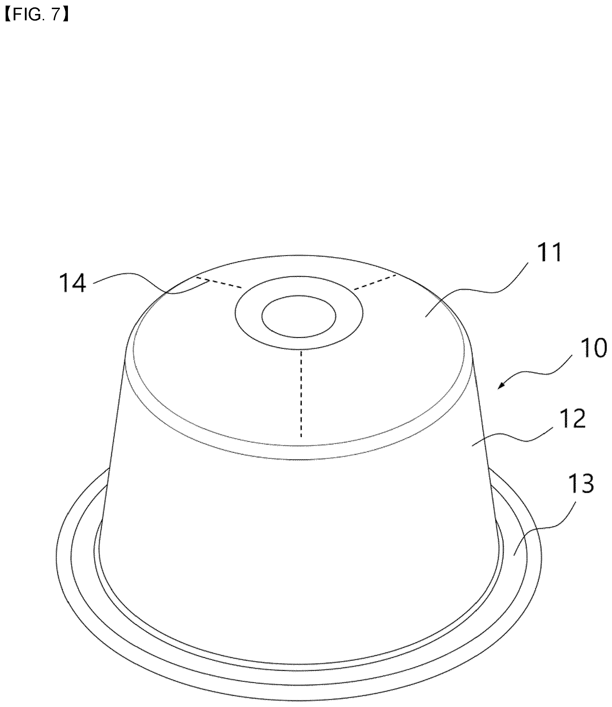

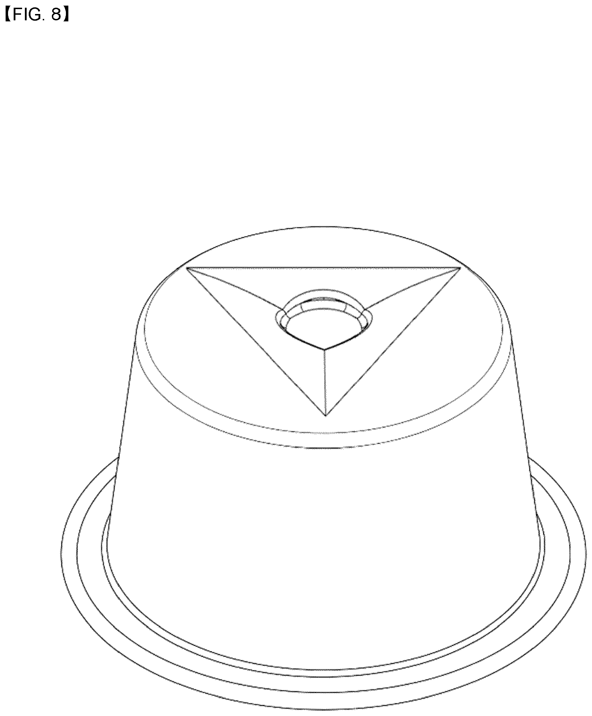

A shape of the guide 14 is not particularly limited. For example, as shown in FIG. 7, the bottom part 11 may comprise two or more guides formed in a straight line from the center of the bottom part 11 toward the outside. When the load of a preset range is applied to the capsule of FIG. 7, the shape of the bottom part 11 may be deformed in the form of FIG. 8.

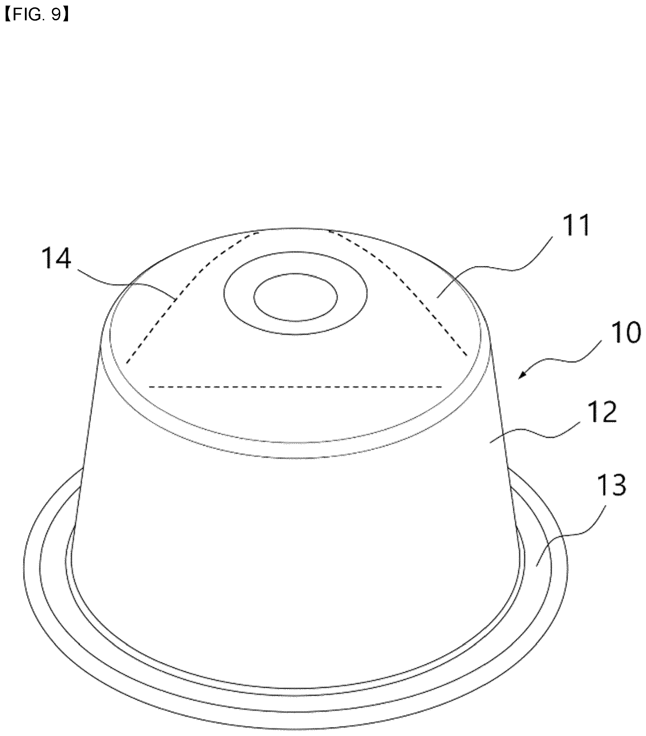

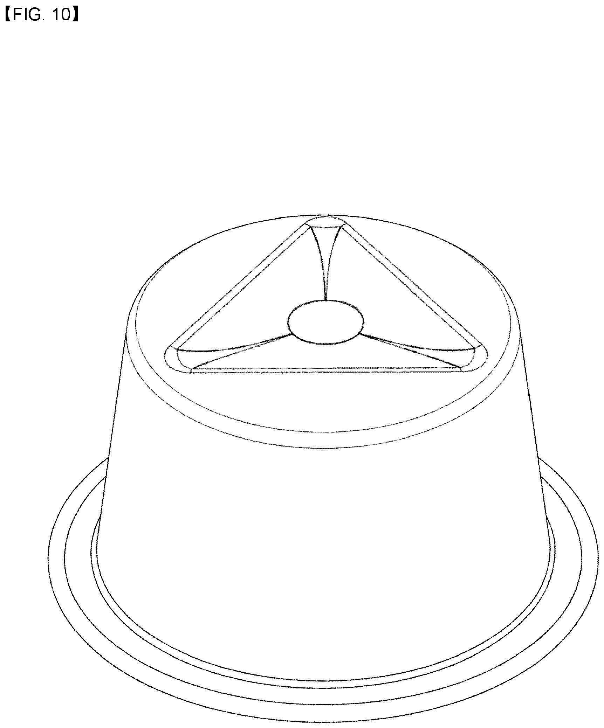

Further, as shown in FIG. 9, a triangular guide 14 may be formed on the bottom part 11. When a load of the preset range is applied to the capsule of FIG. 9, the shape of the bottom part 11 may be deformed in the form of FIG. 10.

The guides 14 shown in FIGS. 7 and 9 are exemplary without being intended to limit the present invention and may be freely deformed within the scope of the technical idea of the present invention. For example, the guide 14 may be formed in a circular shape concentric with the center of the bottom part 11 of the capsule.

In addition to the above-described shape deformation method, it will be understood that a portion that is subjected to the shape deformation is made of a different material or an additional member is provided for the shape deformation within the scope of the present invention.

In a preferred embodiment of the present invention, the capsule capable of deforming the shape may be applied to be used in an apparatus for preparing a beverage.

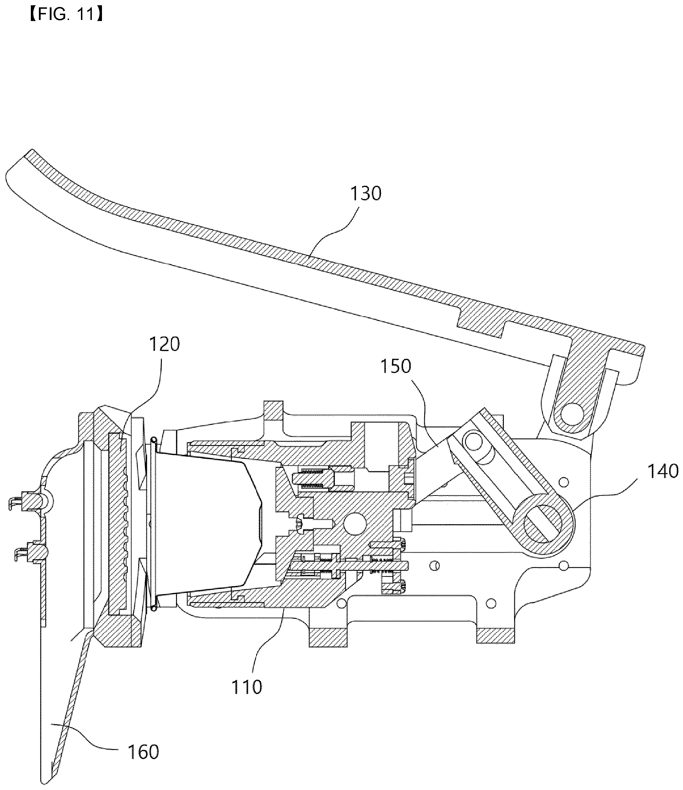

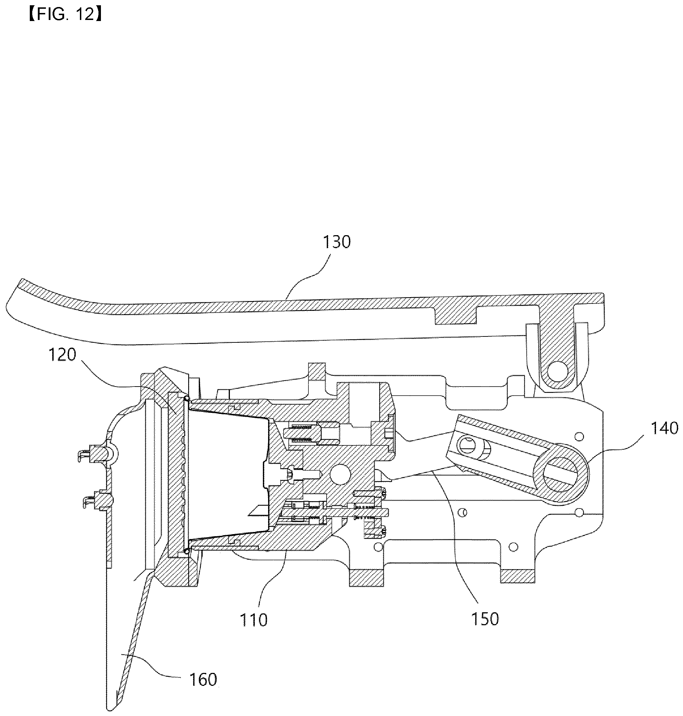

FIGS. 11 and 12 show cross-sectional views of a beverage extraction unit of an apparatus for preparing a beverage according to an exemplary embodiment of the present invention.

FIG. 11 shows an appearance before a capsule is put into but not yet mounted in an apparatus for preparing a beverage. In FIG. 11, the capsule is accommodated in a chamber 110 having a space for accommodating the capsule therein, and a cover 20 of the capsule is adjacent to an extraction member 120.

As shown in FIGS. 11 and 12, by the user's operation of raising and lowering a lever 130, the movement of the lever 130 rotates a fixed shaft 140 and the rotation of the fixed shaft 140 is delivered to a lever arm 150 to forward/retreat the chamber 110 in a straight line. Accordingly, the chamber 110 may move between a capsule insertion position and a capsule extraction position.

The operation manner of the lever 130 as shown in FIGS. 11 and 12 is exemplary for explaining the operation of the apparatus for preparing the beverage of the present invention, but is not limited thereto. For example, the apparatus for preparing the beverage may be configured to move the chamber 110 electrically by pressing a button.

In FIG. 12, if the capsule is completely mounted to the apparatus, a shape of the capsule can be deformed followed by extracting a beverage. The beverage extracted from the capsule may be provided to the user by moving to a beverage outlet 160 through the extraction member 120.

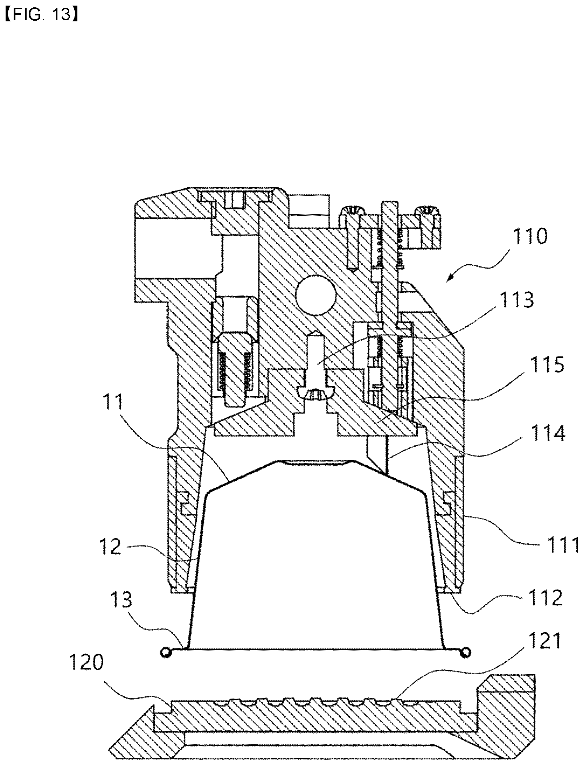

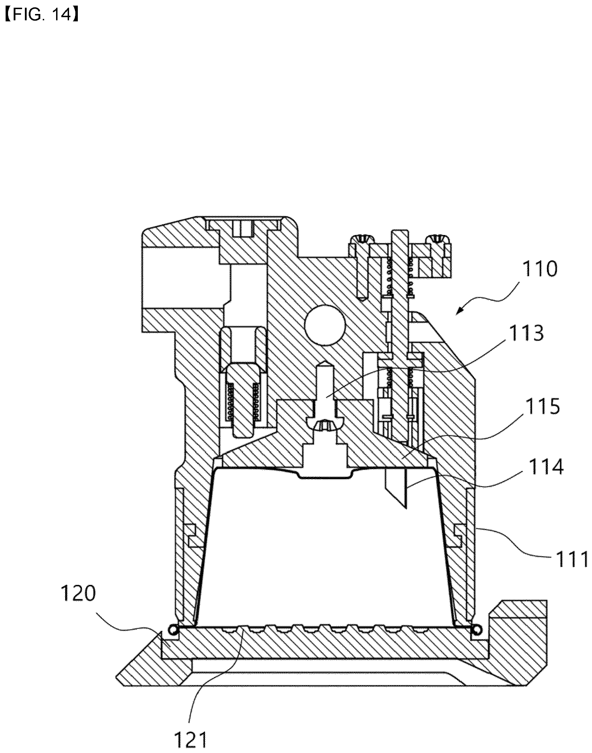

FIGS. 13 and 14 show an appearance of an exemplary chamber of the present invention. FIG. 13 shows an appearance in which a capsule is located within a chamber before the chamber is closed and sealed, and FIG. 14 shows an appearance after a chamber is completely closed to complete sealing.

In the apparatus for preparing the beverage of FIGS. 13 and 14, the capsule is located between the chamber 110 having an inner space of a shape and size similar to an outer shape of the capsule body 10 and an extraction member 120 adjacent to a cover 20 of the capsule.

The chamber 110 comprises a chamber body 111 having an inner space formed to surround a bottom part 11 and a side wall part 12 of the capsule while accommodating the capsule into the chamber, a hermetic closing member 112, as a distal end of the chamber body 111, for completely sealing an interior of the chamber in contact with an extraction member 120, a liquid injecting member 113 for injecting a liquid into the chamber, and a perforating member 114 for forming a hole in the capsule.

Further, in a preferred embodiment of the present invention, the chamber 110 comprises a shape-deforming member 115 for pressurizing a capsule body 10 to deform its shape.

The shape-deforming member 115 is located at an upper end inside the chamber 110. If the chamber is closed by the user's operation, the shape-deforming member 115 may act to deform a shape of the capsule by pressurizing the bottom part 11 of the capsule, but this is merely an example and can be applied in a variety of positions to meet the deformed shape of the capsule. For example, the shape-deforming member 115 may be formed of a separate material coupled to the chamber 110 or may be configured as a part of the chamber 110 having the same material as that of the chamber 110. Alternatively, the shape-deforming member 115 may be provided in a detachable type, and may be configured to be detached from the chamber 110 so that the apparatus extracts the beverage without deforming the shape of the capsule.

As shown in Fig. 14, if the chamber 110 is closed by the user's operation, the chamber body 111 moves downward so that the perforating member 114 forms a hole on the bottom part 11 of the capsule, and before, after or simultaneously with forming the hole on the bottom part 11, the shape-deforming member 115 pressurizes the bottom part 11 to deform the shape of the bottom part 11. In this case, a gas such as carbon dioxide formed inside the capsule may escape through the hole formed by the perforating member 114.

The shape-deforming member 115 may be provided in various sizes and shapes to meet the deformed shape of the capsule. For example, the shape-deforming member 115 may be configured such that the surface contacting the capsule has a flat surface, whereby the substance inside the capsule has a more uniform distribution and a constant height. Alternatively, the shape-deforming member 115 may comprise a protrusion or a recess to deform the bottom part 11 of the capsule into a certain shape. The protrusion may be configured in various shapes such as a circle, a polygon, and a number of straight lines extending outward from the center.

It is preferable that the shape-deforming member 115 is designed to apply a load in a range that deforms only the shape of the bottom part 11 of the capsule and does not deform the other portions such as the side wall part 12.

For example, the shape-deforming member 115 may be configured to apply to the capsule a load of 0.3 to 3.0 kgf, preferably a load of 0.3 to 1.5 kgf, and more preferably 0.3 to 0.6 kgf. If the shape of the capsule is deformed at a load of less than 0.3kgf, it is not desirable because the shape is deformed before the hole is formed by the perforation means, whereby the perforation is not smoothly performed. If an excessive load is applied, the capsule may deviate from the intended shape to be broken. Accordingly, when a load larger than the preset load is applied, the shape of the shape-deforming member 115 may be deformed so that no more load is applied to the capsule.

To this end, the shape-deforming member 115 may be configured to have a size that does not directly pressurize the side wall part 12 of the capsule after the chamber is completely closed. With this configuration, even if an excessive force is applied when the user closes the lever manually, the shape of the capsule can be deformed to a desired shape without damaging the side wall part 12 of the capsule.

In an exemplary embodiment of the present invention, the shape-deforming member 115 may be an elastic body or may comprise a part of an elastic material. By providing the shape-deforming member 115 formed of the elastic body or partially comprising the elastic material, the excessive force may be prevented from being delivered to the capsule and be deformed into a desired shape.

Alternatively, the shape-deforming member 115 may be connected to the chamber 110 by the elastic material. In this case, even if the shape-deforming member 115 is not made of the elastic material, a predetermined load can be adjusted to be applied to the capsule by an elastic connection means.

The elastic body or the elastic material may be any material having elasticity, and, for example, a spring, a rubber, and the like may be used.

At least a portion of the perforating member 114 may be located on at least one surface of the shape-deforming member 115. For example, the perforating member 114 may be provided integrally with the shape-deforming member 115 on a surface of the shape-deforming member 115 adjacent to the capsule. Alternatively, the perforating member 114 may be formed on an inner surface of the chamber 110 and may be configured to pass through the shape-deforming member 115. According to this way, when the shape-deforming member 115 is configured as a detachable type, even if the shape-deforming member 115 is detached, the beverage can still be extracted using the capsule.

In an exemplary embodiment of the present invention, before the shape-deforming member 115 pressurizes the capsule, the perforating member 114 may form a hole in the capsule and then move outside the capsule. Specifically, when the user lowers the lever (or operates automatically) to move the chamber 110 to the capsule extraction position, the perforating member 114 may be configured to move in the capsule direction to make a hole in the capsule and perform an operation of moving in a direction opposite to the capsule direction again. The shape-deforming member 115 may be configured to move in the capsule direction to deform the shape of the capsule while or after the perforating member 114 moves in the direction opposite to the capsule direction. This may be configured by differently connecting a gear connected to the lever with the perforating member 114 and the shape-deforming member 115. With this configuration, when the shape-deforming member 115 pressurizes the capsule, the perforating member 114 is not located inside the capsule, so that it does not interfere with alignment of the substance inside the capsule, which results in more uniform rearrangement.

The perforating member 114 may have a shape of the perforating member conventional in the art, and may be provided with one or in a plurality.

As the chamber 110 is closed, the shape-deforming member 115 pressurizes the capsule to deform its shape, and the hermetic closing member 112 and the extraction member 120 come in contact with the flange 13 of the capsule fitted therebetween to seal the interior of the chamber. In this case, the hermetic closing member 112 may further comprise a sealing member (not shown) made of an elastic material for a more robust sealing.

Thereafter, when the user presses an operation button (or automatically), the liquid is introduced into the chamber 110 through the liquid injecting member 113. Since the interior of the chamber 110 is sealed, the liquid filling the interior of the chamber 110 is injected into the capsule through the hole of the capsule formed by the perforating member 114.

As a result of this operation, if a pressure is generated by the liquid inside the capsule, the cover 20 is ruptured by the protrusion 121 formed on a portion in contact with the capsule cover 20 of the extraction member 120 so that a beverage formed by interaction of the liquid and the substance for forming the beverage inside the capsule is extracted to the outside of the capsule.

The rupture (or tearing) of the cover 20 can be made as soon as the pressure inside the capsule exceeds the threshold value, and includes an action such as fracture, cutting or perforation as well as typical tearing due to elongation of the material of the cover 20 beyond its tensile strength. The protrusion 121 formed on the extraction member 120 may have an arbitrary protrusion shape capable of (partially) tearing the cover 20. For example, the protrusion 121 may have a pyramid shape, a needle shape, a blade shape, a bump shape, a cylindrical shape, and an elongated rib shape.

The extraction member 120 may comprise a number of extraction holes for delivering the beverage exited from the cover 20 of the capsule to the user. The extraction hole is preferably formed between the protrusions 121, and serves to move the beverage that has passed through the extraction member 120 to deliver it to the consumer through a beverage outlet 160.

Hereinafter, the present invention will be described in more detail through Example. Since this Example is for illustrative purposes only, it will be apparent to a person who has an ordinary knowledge in the relevant art that the scope of the present invention is not to be construed to be limited by the Example.

### Experimental Example 1

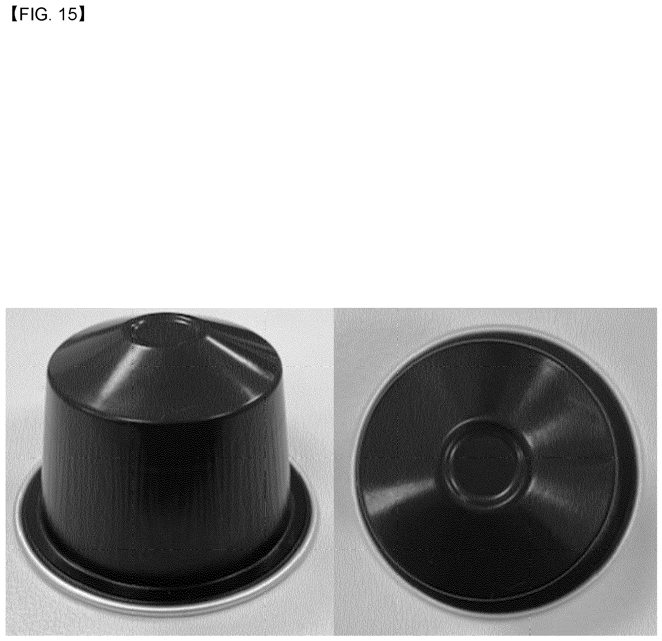

A coffee extraction experiment was conducted using an aluminum coffee capsule of a capacity 9.5 g having the shape of FIG. 15, that is produced by Dongsuh Food Co., Ltd. in Korea.

First, roasted ground coffee beans were filled in the coffee capsule and compressed with an aluminum foil by heating to seal an opening of the capsule. After the manufactured coffee capsule was put into a capsule coffee machine produced by Dongsuh Foods Co., Ltd., coffee was extracted (Comparative Example 1).

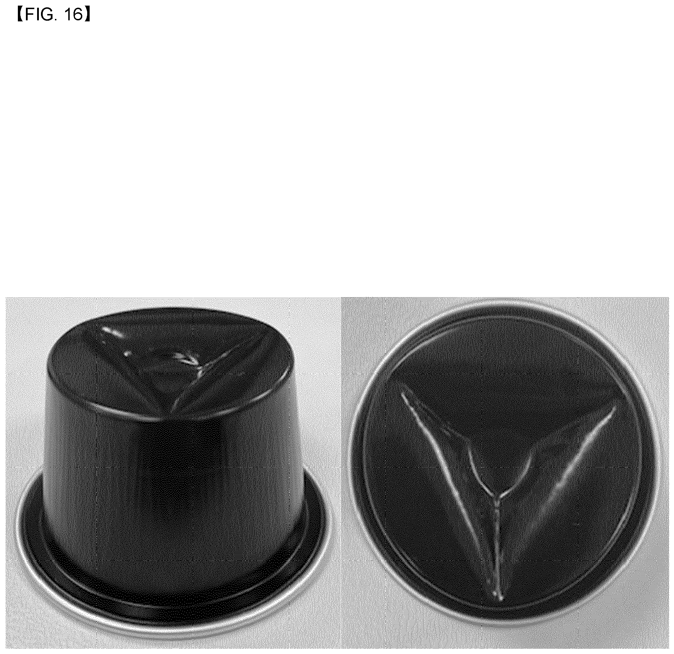

Further, a bottom part of the capsule was pressurized and deformed flat as shown in FIG. 16, and then put into the same capsule coffee machine to extract espresso coffee (Example 1).

This experiment was carried out 10 times, respectively, and the extracted coffees were analyzed and shown in Table 1 below.

**[Table 1]**

| **Division** | **Number** | **Extraction amount (Mℓ)** | **Extraction time (Sec.)** | **Extraction concentration (%)** | **Extraction yield (%)** |
|---|---|---|---|---|---|
| Comparative Example 1 | 1 time | 56 | 16 | 3.13 | 18.5 |
| | 2 times | 57 | 17 | 3.12 | 18.7 |
| | 3 times | 58 | 17 | 3.06 | 18.7 |
| | 4 times | 58 | 17 | 3.08 | 18.8 |
| | 5 times | 57 | 17 | 3.18 | 19.1 |
| | 6 times | 57 | 17 | 3.15 | 18.9 |
| | 7 times | 57 | 16 | 3.06 | 18.4 |
| | 8 times | 57 | 16 | 3.06 | 18.4 |
| | 9 times | 58 | 18 | 3.11 | 19.0 |
| | 10 times | 57 | 17 | 3.04 | 18.2 |
| | **Average** | **57.2** | **16.8** | **3.10** | **18.7** |
| | **Standard Deviation** | - | **0.63** | **0.05** | **0.29** |
| Example 1 | 1 time | 55 | 16 | 3.42 | 19.8 |
| | 2 times | 58 | 18 | 3.29 | 20.1 |
| | 3 times | 58 | 17 | 3.36 | 20.5 |
| | 4 times | 57 | 17 | 3.35 | 20.1 |
| | 5 times | 58 | 18 | 3.26 | 19.9 |
| | 6 times | 58 | 17 | 3.32 | 20.3 |
| | 7 times | 57 | 17 | 3.28 | 19.7 |
| | 8 times | 57 | 17 | 3.3 | 19.8 |
| | 9 times | 57 | 17 | 3.33 | 20.0 |
| | 10 times | 57 | 17 | 3.4 | 20.4 |
| | **Average** | **57.2** | **17.2** | **3.3** | **20.1** |
| | **Standard Deviation** | - | **0.57** | **0.05** | **0.27** |

It was confirmed from the experiment result that, when both of the capsules extracted the same extraction amount, the extraction concentration of the espresso coffee extracted with the deformed capsule of Example 1 was 0.2% higher than that of the Comparative Example 1 and the extraction yield of Example 1 also increased significantly by about 1.4%, while it took 0.4 seconds more.

Therefore, the concentration of coffee that can be extracted from one capsule was higher, so that when the consumer adjusted the concentration of coffee according to their preference to prepare coffee that suits their taste, more coffee could be prepared compared to the same capsule. Further, the intensity of taste and aroma was expressed relatively more intensely, so that an excellent beverage was able to be provided sensorily.

This is believed to be due to the fact that the empty space inside the capsule was eliminated by deforming the shape of the capsule, and that coffee was extracted while the coffee powder was uniformly distributed.

In addition, it was analyzed that the variation was low in view of that the extraction time, concentration and yield were constant for both the capsules of the Example 1 and Comparative Example 1.

### Experimental Example 2

An experiment was conducted to confirm the uncertainty and non-uniformity of the shape deformation of a commercially available capsule product.

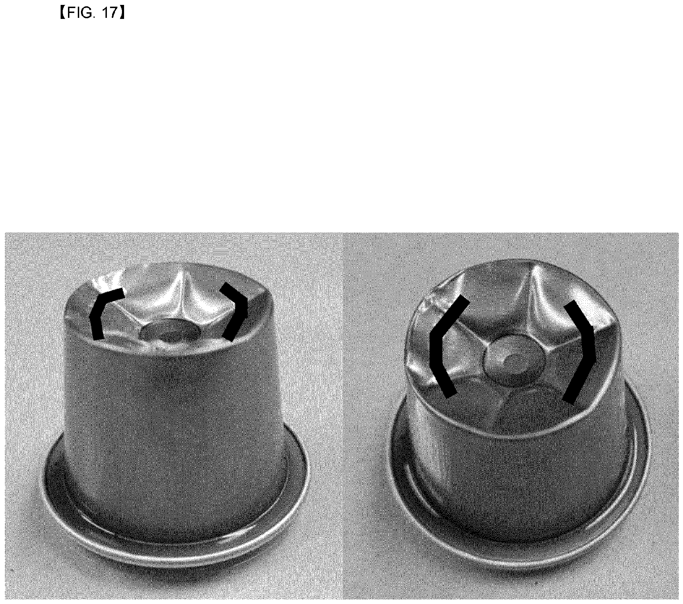

A commercially available capsule of N Company was purchased and the shape of the capsule was forcibly deformed by pressing the bottom of the capsule in the same manner as in Experimental Example 1. Fig. 17 shows the shape of the deformed shape.

In the case of the capsule of the present invention, as can be seen in FIG. 16, the bottom part was deformed into a flat shape to form a flat bed having a constant height of the inner substance. However, as can be seen in FIG 17, the bottom part of the commercial capsule was not flat and the deformed shape was irregular.

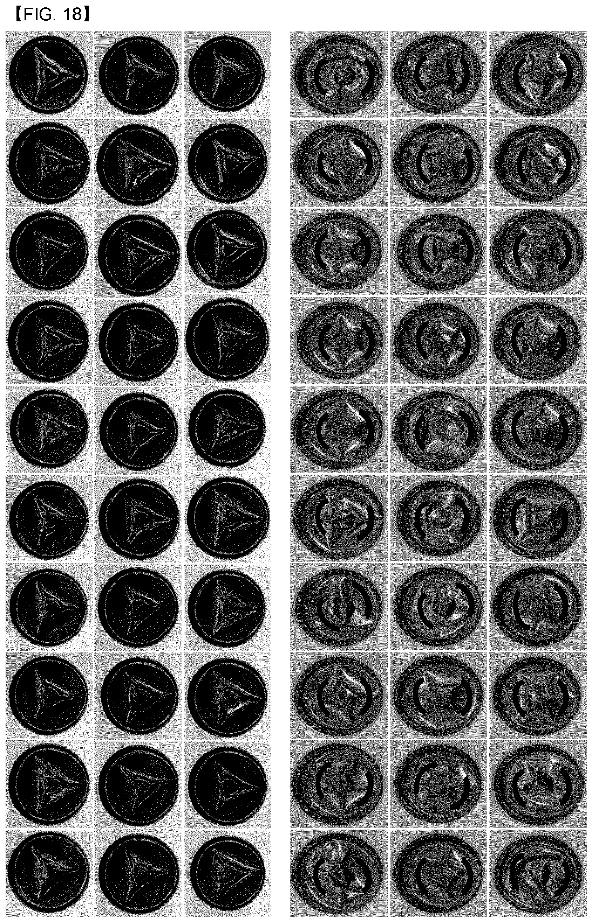

In addition, in order to confirm the uniformity of the shape deformation, the shape of each of the 30 capsules of the present invention and the commercially available capsules was deformed and then the deformed shapes were compared in FIG 18.

As can be seen from the left image of FIG. 18, it is confirmed that all the capsules of the present invention were uniformly deformed in the same shape. However, as can be seen from the right image of FIG 18, the deformed shape of the commercially available capsules is not constant.

### Experimental Example 3

An experiment was conducted to confirm the effect of the deformed shape and the consistency of the deformation on the quality of the extract.

The coffee extraction quality before and after deforming the shape of the capsule was compared using the commercially available capsule used in Experimental Example 2. The experiment was carried out 10 times each, and the results are shown in Table 2 below.

**[Table 2]**

| **Division** | **Number** | **Extraction amount (Mℓ)** | **Extraction time (Sec.)** | **Extraction concentration (%)** | **Extraction yield (%)** |
|---|---|---|---|---|---|
| Comparative Example 2 (Non-deformed) | 1 time | 33 | 12 | 3.12 | 18.7 |
| | 2 times | 33 | 11 | 2.89 | 17.3 |
| | 3 times | 33 | 12 | 3.06 | 18.4 |
| | 4 times | 33 | 12 | 3.08 | 18.5 |
| | 5 times | 33 | 13 | 3.12 | 19.7 |
| | 6 times | 33 | 11 | 2.78 | 16.7 |
| | 7 times | 33 | 12 | 3.12 | 18.7 |
| | 8 times | 33 | 12 | 2.98 | 17.9 |
| | 9 times | 33 | 13 | 3.15 | 18.9 |
| | 10 times | 33 | 11 | 3.12 | 18.7 |
| | **Average** | **33** | **11.9** | **3.04** | **18.3** |
| | **Standard** Deviation | - | **0.74** | **0.12** | **0.7** |
| Comparative Example 3 (Deformed) | 1 time | 33 | 16 | 3.62 | 21.7 |
| | 2 times | 33 | 14 | 3.15 | 18.9 |
| | 3 times | 33 | 14 | 3.31 | 19.9 |
| | 4 times | 33 | 18 | 3.17 | 19.0 |
| | 5 times | 33 | 13 | 2.86 | 17.2 |
| | 6 times | 33 | 19 | 3.31 | 19.9 |
| | 7 times | 33 | 16 | 2.86 | 17.2 |
| | 8 times | 33 | 15 | 3.37 | 20.2 |
| | 9 times | 33 | 14 | 2.71 | 16.3 |
| | 10 times | 33 | 18 | 3.75 | 21.9 |
| | **Average** | **33** | **15.7** | **3.20** | **19.2** |
| | **Standard Deviation** | - | **2.06** | **0.32** | **1.9** |

As a result of the experiment, extraction time was greatly increased due to inconsistency of the deformed shape and the quality deviation of the extracted product was large, while a slight increase in concentration and yield occurred due to shape deformation.

The experimental results of the commercially available capsules are compared with those of the capsule of the present invention, and are shown in Table 3 below.

**[Table 3]**

| **Division** | **Number** | **Extraction amount (Mℓ)** | **Extraction time (Sec.)** | **Extraction concentration (%)** | **Extraction yield (%)** |
|---|---|---|---|---|---|
| Comparative Example 1 | Average | 57.2 | 16.8 | 3.10 | 18.7 |
| | Standard Deviation | - | 0.63 | 0.05 | 0.29 |
| Example 1 | Average | 57.2 | 17.2 | 3.3 | 20.1 |
| | Standard Deviation | - | 0.57 | 0.05 | 0.27 |
| Comparative Example 2 | Average | 33 | 11.9 | 3.04 | 18.3 |
| | Standard Deviation | - | 0.74 | 0.12 | 0.7 |
| Comparative Example 3 | Average | 33 | 15.7 | 3.20 | 19.2 |
| | Standard Deviation | - | 2.06 | 0.32 | 1.9 |

As can be seen from the above table, although the extraction concentration and yield after shape deformation of the capsules of the present invention are significantly improved compared to before deformation, the quality deviation hardly increases or decreases. On the other hand, in the case of the commercially available capsules, as the extraction concentration and yield increased by a small amount, the quality deviation increased, and the extraction time was also significantly increased.

It is believed that, although it is possible to forcibly deform the shape of the commercial capsule by pressing the outer shape, since the shape deformation is not predetermined from the time of manufacture, the substance inside the capsule is not uniformly pressed or the deformed shape is not constant, so the deviation is large and the extraction time is also increased significantly.

From the above description, those skilled in the art to which the present invention pertains will be able to understand that the present invention can be implemented in other specific forms without changing the technical spirit or essential features thereof. In this regard, the Example described above should be understood to be illustrative and non-limiting in all respects. The scope of the present invention should be construed that all changes or modifications derived from the meaning and scope of the claims to be described later rather than the above detailed description, and their equivalent concepts are included in the scope of the present invention.

### EXPLANATION OF REFERENCED NUMERAL

| | | | |
|---|---|---|---|
| 10: | Capsule body | 11: | Bottom part |
| 12: | Side wall part | 13: | Flange |
| 14: | Guide | 20: | Cover |
| 110: | Chamber | 111: | Chamber body |
| 112: | Hermetic closing member | | |
| 113: | Liquid injecting member | | |
| 114: | Perforating member | | |
| 115: | Shape-deforming member | | |
| 120: | Extraction member | | |
| 121: | protrusion | | |
| 130: | Lever | 140: | Fixed shaft |
| 150: | Lever arm | 160: | Beverage outlet |

## Claims

1. An apparatus for preparing a beverage from a capsule, the apparatus comprising:
a chamber 110 configured to have a receiving space capable of inserting the capsule therein and to be movable between a capsule insertion position and a capsule extraction position; and
an extraction member 120 which closes an opening of the chamber 110 when the chamber 110 is placed at the capsule extraction position and causes the cover 20 of the capsule to rupture due to a pressure of a liquid injected into the capsule, thereby extracting the beverage,
wherein the chamber 110 comprises a liquid injecting member 113 for injecting the liquid into the chamber 110 and a perforating member 114 for forming a hole in the capsule,
wherein the chamber 110 further comprises a shape-deforming member 115 for pressurizing the capsule to deform its shape, and
wherein the apparatus is configured to deform the shape of the capsule by the shape-deforming member 115 before extracting the beverage.

2. The apparatus according to claim 1, **characterized in that** at least a portion of the perforating member 114 is located on at least one surface of the shape-deforming member 115.

3. The apparatus according to claim 1, **characterized in that** the perforating member 114 is formed on an inner surface of the chamber 110 and passes through the shape-deforming member 115.

4. The apparatus according to claim 1, **characterized in that** the shape-deforming member 115 is configured as a detachable type.

5. The apparatus according to claim 1, **characterized in that** before the shape-deforming member 115 pressurizes the capsule, the perforating member 114 forms a hole in the capsule and then move to the outside of the capsule.

6. The apparatus according to claim 1, **characterized in that** the shape-deforming member 115 comprises an elastic material.

7. The apparatus according to claim 1, **characterized in that** the shape-deforming member 115 is configured to apply a load of 0.3 to 3.0 kgf to the capsule.

8. A method for preparing a beverage using the apparatus according to any one of claims 1 to 7, the method comprising the steps of:
inserting a capsule into a chamber 110;
moving the chamber 110 to a capsule extraction position so that a perforating member 114 forms a hole in the capsule and a shape-deforming member 115 pressurizes the capsule to deform a shape of the capsule;
injecting a liquid into the chamber 110 through a liquid injecting member 113 so that the liquid interacts with a substance for preparing the beverage in the capsule to form the beverage; and
extracting the beverage by rupturing a cover of the capsule by an extraction member 120.

9. The method according to claim 8, **characterized in that** the capsule cover is ruptured when a pressure of the liquid inside the capsule reaches a predetermined pressure range.

10. The method according to claim 8, **characterized in that** the deformation of the shape is made in a direction in which a volume inside the capsule is reduced.

11. The method according to claim 8, **characterized in that** the volume inside the capsule is reduced between 1 and 20% by the shape deformation of the capsule.

12. The method according to claim 8, **characterized in that** the deformation of the shape is made so that a height (a) of the bottom part 11 is lowered.

13. The method according to claim 8, **characterized in that** the deformation of the shape is made when a load of 0.3 to 3.0 kgf is applied.

14. The method according to claim 8, **characterized in that** the bottom part 11 comprises a guide 14 which has a relatively thin thickness, a relatively weak strength, or a shape folded inward or outward of the capsule so as to be deformed to a predetermined shape.
